(19) Europäisches Patentamt
European Patent Office
Office européen des brevets

(11) EP 3 430 905 B1

(12) **EUROPEAN PATENT SPECIFICATION**

(45) Date of publication and mention of the grant of the patent:
**01.09.2021 Bulletin 2021/35**

(21) Application number: **17765908.3**

(22) Date of filing: **17.03.2017**

(51) Int Cl.:
***A01N 43/36*** *(2006.01)* ***A01P 21/00*** *(2006.01)*

(86) International application number:
**PCT/ES2017/070153**

(87) International publication number:
**WO 2017/158225 (21.09.2017 Gazette 2017/38)**

# (54) USE OF (L)-PYROGLUTAMIC ACID TO INCREASE THE TOLERANCE OF PLANTS TO CONDITIONS OF OSMOTIC STRESS

VERWENDUNG VON (L)-PYROGLUTAMINSÄURE ZUR ERHÖHUNG DER TOLERANZ VON PFLANZEN GEGENÜBER OSMOTISCHEN STRESS

UTILISATION DE L'ACIDE (L)-PYROGLUTAMIQUE POUR ACCROÎTRE LA TOLÉRANCE DES PLANTES À DES CONDITIONS DE STRESS OSMOTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2016 ES 201630317**

(43) Date of publication of application:
**23.01.2019 Bulletin 2019/04**

(73) Proprietors:
- **Consejo Superior de Investigaciones Científicas (CSIC)**
  **28006 Madrid (ES)**
- **Universidad De La Laguna**
  **38200 La Laguna (Santa Cruz de Tenerife) (ES)**

(72) Inventors:
- **JIMÉNEZ ARIAS, David**
  **38205 San Cristóbal de La Laguna (Santa Cruz de Tenerife) (ES)**
- **BORGES RODRÍGUEZ, Andrés**
  **38205 San Cristóbal de La Laguna (Santa Cruz de Tenerife) (ES)**
- **BOTO CASTRO, Alicia**
  **38205 San Cristóbal de La Laguna (Santa Cruz de Tenerife) (ES)**
- **VALDÉS GONZÁLEZ, Francisco**
  **38200 La Laguna (Sta. Cruz Tenerife) (ES)**
- **PÉREZ PÉREZ, José Antonio**
  **38200 La Laguna (Sta. Cruz Tenerife) (ES)**
- **LUIS JORGE, Juan Cristo**
  **38200 La Laguna (Sta. Cruz Tenerife) (ES)**

(74) Representative: **Pons**
**Glorieta Ruben Dario 4**
**28010 Madrid (ES)**

(56) References cited:
**WO-A1-2007/104489 WO-A1-2015/107336**
**WO-A1-2015/107336 WO-A2-2007/056409**
**US-A1- 2015 051 072 US-A1- 2015 051 072**
**US-A1- 2016 037 772 US-A1- 2016 037 772**

- **C. CIRILLO ET AL: "Effects of high salinity and the exogenous application of an osmolyte on growth, photosynthesis, and mineral composition in two ornamental shrubs", JOURNAL OF HORTICULTURAL SCIENCE AND BIOTECHNOLOGY, vol. 91, no. 1, 2 January 2016 (2016-01-02), pages 14-22, XP55609009, GB ISSN: 1462-0316, DOI: 10.1080/14620316.2015.1110988**
- **P. V. Devi Prasad ET AL: "Influence of Proline and Hydroxyproline on Salt-Stressed Axillary Bud Cultures of Two Varieties of Potato (Solanum tuberosum)", In Vitro Cellular & Developmental Biology. Plant, 1 January 1996 (1996-01-01), pages 47-50, XP55608947, DOI: 10.1007/BF02823013 Retrieved from the Internet: URL:https://www.jstor.org/stable/20064873**
- **RAJENDRAKUMAR C S ET AL: "DNA helix destabilization by proline and betaine: possible role in the salinity tolerance process", FEBS LETTERS, ELSEVIER, AMSTERDAM, NL, vol. 410, no. 2-3, 30 June 1997 (1997-06-30), pages 201-205, XP027289619, ISSN: 0014-5793 [retrieved on 1997-06-30]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 430 905 B1

- **INÈS SLAMA ET AL: "Diversity, distribution and roles of osmoprotective compounds accumulated in halophytes under abiotic stress", ANNALS OF BOTANY., vol. 115, no. 3, 5 January 2015 (2015-01-05), pages 433-447, XP55530986, GB ISSN: 0305-7364, DOI: 10.1093/aob/mcu239**
- **V .: "Vulkano - Blattdüngerkomplex mit Pyroglutaminsäure", Produktinformation, 29 April 2016 (2016-04-29), pages 1-3, XP55608677, Erding, Germany Retrieved from the Internet: URL:http://www.sudau-agro.de/wp-content/uploads/2019/04/Produktinformation-Vulkano.p df [retrieved on 2019-07-25]**
- **.: "Vulkano (EG-Sicherheitsdatenblatt)", , 15 December 2015 (2015-12-15), pages 1-9, XP55609097, Erding, Germany Retrieved from the Internet: URL:https://www.raiffeisen.com/php/agrar_sdb/pdf/9315/586193a6ca540c2a35c7cf9b3816773f [retrieved on 2019-07-26]**

## Description

The present invention relates to the use of (L)-pyroglutamic acid to increase the tolerance of plants to conditions of osmotic stress caused by the difficulty of accessing water in the environment, such as those caused by salt stress or water deficit. Based on the above, this invention can be included in the area of the application of compounds and substances to favour the development of plants in the described conditions of osmotic stress.

## STATE OF THE ART

The lack of accessibility to water by plants is one of the factors which has the most decisive influence on the decrease in productivity of agricultural crops. This lack of accessibility to water may be due to conditions of meteorological, agricultural or hydrological drought, which in short relates to a water deficit in the environment and a physiological drought.

Physiological drought occurs when the soluble salts are in high concentrations in the soil solution, limiting the uptake of water by the plant due to the low water potential generated.

In any of the drought situations described above, osmotic stress occurs in the plants, which has the consequence of generation of a very similar physiological, biochemical and molecular response which affects their development (Sairam and Tyagi, 2004. Current Science 86(3), 407-421).

It is known that plants, and as survival strategy in these situations of stress, may adjust their osmotic potential generating a water potential lower than that of the soil solution, to be able to access the water present therein (Munns and Tester, 2008. Annual Review of Plant Biology 59: 651 -681).

It is also known that the adaptation of plants to different stress conditions may be stimulated by chemical compounds to attempt to cancel out the negative affect on their development, such as, for example, patent ES2332494B1 claims the use of menadione, a vitamin K derivative, to increase the tolerance of plants to the osmotic stress caused by salinity.

In relation to the use of amino acids to improve the development conditions of plants, it is widely known that mixtures of this type of organic molecules from protein hydrolysate have been used in Europe since 1968 to: fertilize the land, as pesticides, fungicides and growth regulators by a nutritional effect of the crops.

There are also documents that relate to the use of amino acids to increase tolerance to situations of low water availability due to physiological drought. In this regard, we should highlight the work of El-Samad et al. (2011. Journal of Medicinal Plants Research 5:24, 5692-5699) which relates to the use of non-cyclic amino acids such as phenylalanine or proline; or patent application document US2009054241A1, wherein a proline derivative is used, specifically hydroxyproline. However, in any of these cases, the efficacy in relation to the increase in tolerance is still limited.

WO 2007/056409 A2 discloses the use of pyroglutamic acid for increasing the performance of a target plant by foliar or root application and the use of a mixture of (D) and (L)-pyroglutamic acid promotes the resistance of plants to stress.

P. V. Devi Prasad et al. (1996. In Vitro Cellular & Developmental Biology- Plant, 32, 47-50) discloses the use of hydroxyproline to increase the tolerance of potato plants against salt stress while the exogenous supply of proline or hydroxyproline to a plant causes some sort of stress by itself, both compounds alleviate salt stress.

WO 2007/104489 A1 discloses the use of 4-hydroxyproline for increasing the tolerance of plants to conditions of abiotic stress wich includes drought and salinity of the soil.

Based on the above, it is considered of interest to search for new amino acids, which when applied to plants, are capable of stimulating their natural mechanisms to increase tolerance to conditions of osmotic stress.

## DESCRIPTION OF THE INVENTION

It is considered that the problem resolved by the invention is the selection of organic molecules, specifically amino acids, which when applied to plants, enable increasing their tolerance to the conditions of osmotic or water stress and, hence, their productivity is not reduced in relation to plants not subjected to said stress.

The inventors have observed that some amino acids, specifically non-proline cyclic amino acids of general formula (III) are capable of stimulating the natural mechanisms of plants which allow them to overcome conditions of osmotic stress, significantly increasing their biomass production in these adverse conditions and approximating them to the values of control plants not subjected to said stress (see example 2). They have also observed the effect of the stimulus of said amino acids in the water use of the plants treated with them in situation of osmotic stress caused by water deficit (see example 5). The inventors have also verified that the use of other different amino acids, used in the same experimentation conditions, do not achieve a biomass production recovery with respect to a control or if they do achieve it, this is to a lesser extent (see examples 1 to 5).

The advantages of the use of non-proline cyclic amino acids of general formula (III), which are included in the scope of the present invention, are:

- they have a clearly superior effect to that shown by other amino acids described in the state of the art, such as, for example, alanine or hydroxyproline, in the improvement of tolerance to conditions of osmotic stress;
- they are natural amino acids or biodegradable derivatives that minimize environmental impact; and
- they enable safe handling by the operators during the application.

In a first aspect, the invention relates to the use of a compound of formula (III) to increase the tolerance of a plant to osmotic stress.

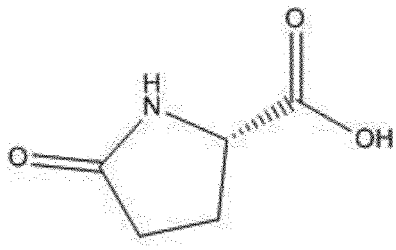

(III)

The compound of formula (III) has a chiral centre which give rise to stereoisomers. The present disclosure describes each one of these stereoisomers and their mixtures.

The disclosure also describes the water-soluble derivatives of the amino acid of the invention.

The "conditions of osmotic stress" are caused by a difficulty in accessing available water in the environment which houses a plant and that the person skilled in the art knows as an element common to circumstances of meteorological, agricultural, hydrological (situations of water deficit) or physiological drought (situations of salinity), and which have similar effects on the plant's defence mechanisms and on the reduction in its development (Sairam and Tyagi, 2004. Current Science 86(3), 407-421).

The results included in the document (see example 2) have demonstrated that the amino acid of the invention is effective in increasing tolerance in conditions of osmotic stress, such as, for example, caused in conditions of salinity and, also, in conditions of osmotic stress caused by water deficit (see example 5).

In another embodiment, the invention relates to the use of a compound of formula (III) as previously defined to increase tolerance to osmotic stress caused by a water deficit.

In another embodiment, the invention relates to the use of a compound of formula (III) as previously defined to increase tolerance to osmotic stress caused by salinity.

As previously mentioned, some of the compound of the present disclosure may exist as various diastereoisomers and/or various optical isomers. The diastereoisomers can be separated by conventional techniques such as chromatography or fractionated crystallization. The optical isomers may be resolved by conventional techniques of optical resolution to give optically pure isomers. This resolution can be carried out in any of the intermediate products of a compound of formula (III). The optically pure isomers can also be individually obtained using enantioselective synthesis. The present disclosure covers all the individual isomers and the mixtures thereof (such as, for example, racemic mixtures or mixtures of diastereoisomers), both obtained by synthesis and by physical mixture thereof.

In a second aspect, the invention relates to a method to improve tolerance to conditions of osmotic stress, hereinafter method of the invention, which comprises administering to the plant an effective dose of at least one compound of formula (III) as previously defined.

Although the person skilled in the art will know that it is possible to use the amino acid of the invention in any medium that favours its penetrability in the plant material, preferably the method of the invention comprises using the compound of formula (III) in aqueous solution.

The method of the invention also comprises using the amino acid of the invention together with different vehicles and agents that facilitate its storage, handling and application.

In another embodiment, the invention relates to the previously defined method wherein the compound of formula (III) can be used together with another active ingredient. Examples of additional active ingredient are, by way of non-limiting indication, nematicides, insecticides, acaricides, fungicides, bactericides, herbicides, growth regulators, fertilisers, synergies, fertilisers and soil conditioners, and preferably wherein the additional active ingredient is selected from nematicide, insecticide, acaricide, fungicide, bactericide and herbicide.

As previously explained, in the description of the use of the amino acid of the invention (compound of formula (III)), and coherently, the method of the invention is of application to increasing tolerance to osmotic stress caused by

a water deficit or by salinity.

The effectiveness of the method of the invention is evident on verifying the reduction of the negative effects caused by osmotic stress, after application of the amino acid of the invention in plants treated with moderate doses of NaCl (50 mM) (Attia et al., 2008. Physiologia Plantrum 132: 293-305), which evidently increases biomass production to values close to those obtained by control plants without osmotic stress. It is also verified that application of the amino acid of the invention causes a systemic response and, in consequence, its effects extend to the rest of the plant from the roots.

In the present document "plant" is understood to equally be an individual and a plurality thereof, whether considered in its totality, i.e. including the aerial part and root part irrespective of its stage of development, or partially considered, i.e. any portion thereof that can be used as reproductive or propagating plant material.

"Reproductive plant material" is understood as both the seed, and the fruit that comprises it.

"Propagating plant material" is understood as any fragment of a plant wherefrom at least one new specimen can be obtained, and which is normally used as the base in propagation techniques, for example, propagation by layers, cuttings, stakes, runners, buds, rhizomes, tubers, bulbs or corms; graft propagation; micropropagation; or in-vitro crop propagation.

As the person skilled in the art knows, depending on the state of development of the plant or on the type of plant material, different application techniques of phytosanitary products are possible. Thus, for example, for plants already established in situ, for application in the aerial part, the most suitable techniques may comprise the spraying of the amino acid of the invention on the leaves, or the injection in the stem, whilst for the root part, the application may be performed by incorporation in the irrigation water or the substrate that houses the plant.

However, for plant material in stages prior to planting, additionally to the previous techniques, it is also possible to immerse the root part in a solution comprising the amino acid of the invention or the total immersion of the plant material, whether reproductive or propagation. Preferably, the application is by immersion of the root part.

Examples of crop wherein the method of the invention can be applied are any monocotyledons and dicotyledons, by way of non-limiting indication, crops of cereals, fruit trees, pulses, vegetables or ornamental plants. In particular, an example of crop is the tomato.

In another embodiment, the invention relates to the method as previously defined, which comprises the application in aqueous solution of the compound of formula (III) by immersion of the root system.

In another embodiment, the invention relates to the method as previously defined, which comprises the application in aqueous solution of the compound of formula (III) by seed immersion.

The "effective dose" may optionally increase or decrease depending on the amino acid of the invention selected, the plant material, its stage of development, or the type of formulation, the time, the place, frequency of application and the degree of osmotic stress.

In a particular embodiment of the method of the invention, the amino acid of the invention is used in a range of concentrations from 0.1 $\mu$M to 3 M.

Throughout the description and the claims, the word "comprises" and its variants are not intended to exclude other technical characteristics. For persons skilled in the art, other objects, advantages and characteristics of the invention will be inferred in part from the description and in part from the practice of the invention. The following figures and examples are provided by way of illustration, and are not intended to limit the present invention.

## BRIEF DESCRIPTION OF THE FIGURES

**Fig. 1.** Represents a diagram wherein it shows the growing conditions during the assay.

**Fig. 2.** Represents the weight of tomato plants after 7 days of growth in the different solutions. * Significant differences with respect to the reference group with the same treatment with a p value<0.05;** Significant differences with respect to the reference group with the same treatment with a p value <0.01.

**Fig. 3.** Represents the relative water content of the different treatments after 10 days of assay.** Significant differences with respect to its control with a p value <0.01.

**Fig. 4.** Represents the net photosynthesis measurements.** Significant differences with respect to the drought reference with a p value <0.01

**Fig. 5.** Represents the efficiency in water use (Evapotranspiration/Net photosynthesis. Evapotranspiration = $\mu$mol $H_2O$ $s^{-1}$; Net photosynthesis = $\mu$mol $CO^2$ $m^{-2}$ $s^{-1}$. ** Significant differences with respect to the drought reference

with a p value <0.01

## EXAMPLES

The conditions described below were used as the base for all examples included below. The growing conditions, such as the nutrient solution and the substrate used have been optimized to perform this type of experiments. Likewise, the dose of NaCl used has been optimized for this type of experiments since 50 mM makes it possible to evaluate if a treatment is capable of increasing tolerance to salinity (Jiménez-Arias et al., 2015. Environmental and Experimental Botany 120,23-30).

A hydroponic culture system was used for the cultivation of the *Arabidopsis thaliana* plants necessary for the assays. This system was established in hydroponics trays with 1.9 L capacity (Araponics®) wherein 18 plants were grown per container. A mixture of river sand with two different granulometries was used as physical substrate. The seeds were sowed in seed-holders, which were deposited during one week in a small greenhouse consisting of a high-density polyethylene tray with river sand (washed siliceous sand, with medium granulometry) with sterile distilled water covered with a transparent plastic sheet which was deposited in a growth chamber at 22 ± 2º C, with a photoperiod of 16 hours of light (100-110 μmol m-2 s-1 of PAR) and with 100% relative humidity. After one week, the seed-holders with the seedlings were transferred to the hydroponics trays in the same photoperiod and light intensity conditions but with 60-70% of relative humidity. The seedlings were maintained without aeration during the first week, after this the solution (Table 1) was generously aerated using aeration pumps and was renewed every 7 days.

Table 1. Hydroponic solution used in the experiments

| Macronutrients (mM) | Micronutrients (μM) |
|---|---|
| $KNO_3$ (1.25) | $H_3BO_3$ (50) |
| $KH_2PO_4$ (0.5) | $MnSO_4$ x $H_2O$ (10) |
| $MgSO_4$ x $7H_2O$ (0.75) | $ZnSO_4$ x $7H_2O$ (2) |
| Ca $(NO_3)_2$ x $4H_2O$ (0.75) | $CuSO_4$ x $5H_2O$ (1.5) |
| | $(NH_4)_6Mo_7O_{24}$ x $4H_2O$ (0.075) |
| | Sequestrene® (44,8) |

### Example 1. Effect of alanine on the response of *A. thaliana* to the salt stress caused by the addition of NaCl

To verify if the fundamental structure of the amino acids produces protective effects against salt stress, a simple amino acid, such as alanine, was used.

In this way, 21-day old plants were treated during 24 hours in nutrient solution enriched with a concentration of 2.5 mM of alanine. Subsequently, the plants were deposited in normal nutrient solution for 24 hours and they later grew for 7 days in nutrient solution with or without a supply of 50 mM of NaCl. This experiment was repeated twice, using 12 plants per experiment, with the value shown in table 2 being the average of 24 plants for each one of the conditions.

Subsequently, the wet weight of the aerial part of the plants was determined.

The following table (Table 2) shows the results of the amino acid alanine on the development of the plants.

Table 2: Effects of alanine on growth in optimal and saline conditions.

| | Untreated | Alanine | Salt | Alanine-salt |
|---|---|---|---|---|
| Fresh weight (mg plant) | 130±16 | 142±8 | 52±8** | 36±2** |
| RGR | 0.53 | 0.58 | 0.21** | 0.11** |

The data shown are the average of two independent experiments with 24 plants in total. The ** show significant differences with respect to the control group with a p<0.01. RGR: Relative growth rate (R.G.R= (In Dw2- In Dw1) / (T2-T1); In being the Napierian logarithm; Dw dry weight and T time).

As can be observed, the structure represented by the amino acid alanine was not capable of promoting growth, nor increasing tolerance to salinity, moreover, it seems that it harmed the plants with the same dose of salt.

**Example 2. Effect of pyroglutamic acid or pipecolinic acid on the response of *A. thaliana* to the salt stress caused by the addition of NaCl**

21-day old plants were treated during 24 hours in nutrient solution enriched with a concentration of 2.5 mM of pyroglutamic acid or pipecolinic acid. Subsequently, the plants were deposited in normal nutrient solution for 24 hours and they later grew for 7 days in nutrient solution with or without a supply of 50 mM of NaCl. This experiment was repeated twice, using 12 plants per experiment, with the value shown in table 2 being the average of 24 plants for each one of the conditions.

The fresh weight of the samples is shown in the following table (Table 3).

Table 3: Effects of pyroglutamic acid and pipecolinic acid on growth in optimal and saline conditions

| | Untreated | Pyroglutamic acid | Pipecolinic acid | Salt | Pyroglutamic acid | Pipecolinic acid-salt |
|---|---|---|---|---|---|---|
| Fresh weight (mg plant) | 158.3±20 | 183.9±15 | 145.9±22 | 90±18** | 170.4±15 | 133.9±21 |
| RGR | 0.56 | 0.56 | 0.46 | 0.23 | 0.49 | 0.45 |

The data shown are the average of two independent experiments with 24 plants in total. The ** show significant differences with respect to the control group with a $p<0.01$. RGR: Relative growth rate (R.G.R= (ln Dw2- ln Dw1) / (T2-T1); ln being the Napierian logarithm; Dw dry weight and T time).

As can be observed, the salt again decreased growth considerably, as the fresh weight and relative growth rate show, after one week of being subjected to salt stress. This did not occur significantly in those plants that were previously treated with 2.5 mM of pyroglutamic acid or with 2.5 mM of pipecolinic acid, so that their effect on the increased tolerance to salt stress is proven.

**Example 3. Comparison of the effect of pyroglutamic acid, pipecolinic acid or hydroxyproline on the response of *A. thaliana* to the salt stress caused by the addition of NaCl**

With the aim of demonstrating that the use of these compounds is more effective than the use of other amino acids that have already been disclosed such as the case of hydroxyproline (US20090054241 A1), the effect of a treatment with a 2.5 mM dose of pyroglutamic acid or pipecolinic acid, or hydroxyproline was compared.

The plants were deposited in nutrient solution enriched with one of the compounds indicated above for 24 hours and they later grew for 7 days in nutrient solution with a supply of 50 mM of NaCl. As control, the plants grown on nutrient solution and NaCl were used. This experiment was repeated twice, using 12 plants per experiment, with the value shown in table 2 being the average of 24 plants for each one of the conditions.

Two measurements were used in order to illustrate the defence to salt stress. First, the values for the sensitivity index (S.I) described by Saadallah et al. (2001, Agronomie 21, 627-634) is shown.

The greater the negative value of the S.I., the greater the negative effect of salinity on the plant. The second measurement is a percentage of reduction in the relative growth rate of the plant subjected to conditions of salt stress.

The results are shown in the following table (Table 4).

Table 4: Effects of pyroglutamic acid, pipecolinic acid or hydroxyproline on the sensitivity index

| | Control | Pyroglutamic acid | Pipecolinic acid | Hydroxyproline |
|---|---|---|---|---|
| S.I | -0.70 | -0.1** | -0.07** | -0.25** |
| % reduction RGR | 62.00 | 10.22** | 8.12** | 24.34** |

(S.I=DWs-DWc/DWc; being Dry weight plants in saline conditions; Dry weight in control conditions) and the percentage of reduction in relative growth rate (% Red. R.G.R=(RGRs-RGRc/RGRc)x100; with RGRs growth rate of plants grown in saline conditions; RGRc growth rate of plants grown in control conditions). The data shown are the average of two independent experiments with 24 plants in total. The ** show significant differences with respect to the control group with a $p<0.01$.

As can be observed, the use of either of the two compounds considerably increased tolerance with respect to hydroxyproline, so that the use of these compounds at the same dose was more beneficial for the growth of the plant in salt stress conditions.

**Example 4. Comparison of the effect of pyroglutamic acid, pipecolinic acid or hydroxyproline on the response of *Solanum lycopersicum* (tomato) to the salt stress caused by the addition of NaCl**

This assay enables demonstrating that the use of the compounds of the invention is more effective than the use of other already disclosed amino acids, such as the case of the aforementioned hydroxyproline, for growing commercial plants. As an example, tomato (*Solanum lycopersicum*) of the variety Realeza pear was used. The experiment commenced with 3-week old tomatoes which were placed in hydroponic trays with 4 L of a mixture of nutrient solution (Table 1) and distilled water in a proportion of 1:1.

The trays were placed in a growth chamber at 22 ± 2º C, with a relative humidity of 60 - 70%, using a photoperiod of 16 hours of light (100-110 $\mu$mol $m^{-2}$ $s^{-1}$ of PAR). From the first day, the solution was generously aerated by air pumps (30 min per day). The plants were maintained during two days with this proportion of solution and distilled water, and then they were removed from the medium and placed, under the same conditions, in plastic containers during 24 hours with the different treatments in distilled water (table 5):

Table 5: Treatments used in the assay

| Treatment |
|---|
| Reference |
| Pyroglutamic (2.5 mM) |
| Pipecolinic (2.5 mM) |
| Hydroxyproline (OH-Pro) (2.5 mM) |
| Proline (2.5 mM) |

After 24 hours, the plants were again introduced in the trays with the same proportion of distilled water/nutrient solution stated above and they were maintained like this for 48 hours. Then, the nutrient solution was removed from all the trays and changed for 4 litres of a new solution with each one of the conditions under study (Figure 1), keeping the plants in these conditions for 7 days (the quantity of water of each one of the trays was controlled every two days and, if necessary, it was corrected with a solution of NaCl in distilled water with the concentration established for the tray.

Then, the growth of treated and untreated plants was compared, in normal conditions and salinity conditions. For the statistical analysis, the data collected was subjected to the normality test of the Kolmogorov-Smirnov test with the Lilliefors correction. Levene's test was used to verify the homoscedasticity of the data. As the data behaved following a normal distribution, its measurements were compared by one-way ANOVA and the significant differences were calculated using the Bonferroni post hoc test. The statistical analyses were performed with the SSPS computer package, version 20 for Windows.

As figure 2 indicates, under control conditions only those plants treated with hydroxyproline show a growth significantly different to that of the reference. They show a decrease in their growth (of 35%), for which reason we can establish that root treatment with hydroxyproline in our conditions has been harmful for the plant.

As regards growth in saline conditions, it can be observed how the plants of the reference group decreased their growth by 32%. This reduction was increased in the plants treated with proline via 24-hour root treatment (42% with respect to the growth in the control solution) although there are no significant differences when compared with the reference in saline conditions, for its part hydroxyproline only decreased its growth 17%. As regards the plants treated with pipecolinic and pyroglutamic acid, the growth decreased only by 7 and 9% respectively, with this fresh weight value being very significant with respect to its counterpart in the control group. This involves an increase in tolerance of 72% (pyroglutamic) and 78% (pipecolinic) if we compare with the control, and if we compare with the proline treatment it is 78% (pyroglutamic) and 83% (pipecolinic).

**Example 5. Comparison of the effect of pyroglutamic acid, pipecolinic acid or hydroxyproline on the response of *Solanum lycopersicum* (tomato) to drought in greenhouse conditions (water deficit).**

The crop used was tomato (*Solanum lycopersicum*) of the *"Gransol" capa negra* variety. The experiment was performed in a glass greenhouse with four tables measuring 10 metres in length by 2 metres in width. Drip irrigation was used, supplied by self-compensated drippers to control the flow of water at all times.

5-week old seedings were transplanted to 2-litre capacity pots using a mixture of peat and river sand to facilitate drainage. In total, 120 tomato plants were used. Four treatments were performed on 40 plants after the transplant (with 15 days between each treatment), adding 50 ml of a 2.5 mM concentration of Pyroglutamic to each pot. Another 40

plants were treated via root applications using 2.5 mM of pipecolinic acid. The remaining plants randomly distributed throughout the greenhouse were treated with distilled water by way of control. The drought assay commenced on completing the four treatments, which was performed by removing the dripper from the 20 plants randomly chosen for each one of the treatments. The plants were deprived of water for 10 days.

The relative water content of the leaf was estimated after 10 days of drought for each one of the treatments, in control conditions and drought conditions, using 15 leaves. The following formula was used for this:

$$R.W.C\ (\%) = [(Fw-Dw) / (Tw-Dw)] \times 100$$

With Fw: fresh weight; Dw: dry weight; Tw: turgor weight. RWC is the measurement most commonly used to estimate the possible water deficit a plant leaf has.

Furthermore, photosynthesis was estimated with the "Lc-pro sd" system (ADC Bioscientific). To do this, the tomato leaves were stimulated with a light source at 1000 μmol m-2 s-1, with this light intensity being previously estimated to achieve the maximum photosynthesis in our crop and conditions. To do this, the parameters of net photosynthesis (A) and evapotranspiration (E) were determined, calculating with them the efficiency in water use (A/E) as described by Lambers et al. (2008. Plant Physiological Ecology. 2nd edition. Springer, New York*)*. The measurements were taken after 10 days of assay from six plants for each one of the treatments.

The data of the different variables were subjected to the normality test using the Kolmogorov-Smirnov test with the Lilliefors correction. Levene's test was used to verify the homoscedasticity of the data. As the data behaved following a normal distribution, its measurements were compared by one-way ANOVA and the significant differences were calculated using the Bonferroni post hoc test. The statistical analyses were performed with the SSPS computer package, version 20 for Windows.

The results of the statistical analysis are shown in Figure 3, wherein it can be observed how after ten days of drought the reference plants significantly decrease their relative water content (10.2%), whilst the plants treated with four treatments at 2.5 mM of pyroglutamic did not show this decrease. The plants treated with pipecolinic acid did show a decrease with respect to their control, but this was less than that in the reference plants (5.1%); however, these differences were not significant with respect to their control.

These data were corroborated by the gas exchange measurements. As shown in figure 4, the plants treated with pyroglutamic or pipecolinic had a net photosynthesis greater than the drought reference plants.

The analysis of the net photosynthesis and evapotranspiration measurements revealed the efficiency in the water use was significantly greater for the treated plants (Figure 5). This efficiency was almost double in the treated plants than in the drought reference.

**Claims**

1. Method to increase the tolerance of plants to conditions of osmotic stress, **characterized in that** it comprises administering to the plant an effective dose of at least one compound of formula (III).

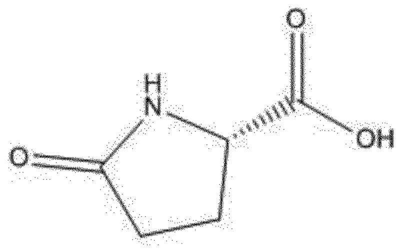

(III).

2. The method according to claim 1, **characterized in that** the compound of formula (III) is used in aqueous solution.

3. The method according to any of claims 1 or 2, **characterized in that** additionally the compound of formula (III) uses an active ingredient which is selected from a nematicide, insecticide, acaricide, fungicide, bactericide and herbicide.

4. The method according to any of claims 1 to 3, **characterized in that** the osmotic stress is caused by a water deficit or by salinity.

5. The method according to any of claims 1 to 4, **characterized in that** the application of the compound of formula (III) is carried out using a technique selected from spraying, injection, irrigation, immersion and application in substrate.

6. The method according to any of claims 1 to 5, **characterized in that** the application is performed by immersion of the root system.

7. The method according to any of claims 1 to 5, **characterized in that** the application is performed by seed immersion.

## Patentansprüche

1. Verfahren zur Erhöhung der Toleranz von Pflanzen gegenüber Bedingungen von osmotischem Stress, **dadurch gekennzeichnet, dass** es die Verabreichung einer wirksamen Dosis von mindestens einer Verbindung der Formel (III) an die Pflanze umfasst.

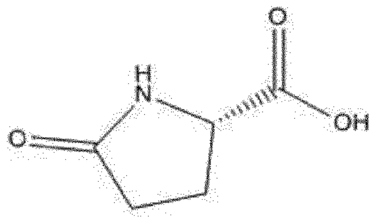

(III).

2. Verfahren nach Anspruch 1, **dadurch gekennzeichnet, dass** die Verbindung der Formel (III) in wässriger Lösung verwendet wird.

3. Verfahren nach einem der Ansprüche 1 oder 2, **dadurch gekennzeichnet, dass** die Verbindung der Formel (III) zusätzlich einen Wirkstoff verwendet, der ausgewählt ist aus einem Nematizid, Insektizid, Akarizid, Fungizid, Bakterizid und Herbizid.

4. Verfahren nach einem der Ansprüche 1 bis 3, **dadurch gekennzeichnet, dass** der osmotische Stress durch ein Wassermangel oder durch Salzgehalt verursacht wird.

5. Verfahren nach einem der Ansprüche 1 bis 4, **dadurch gekennzeichnet, dass** die Applikation der Verbindung der Formel (III) unter Verwendung einer Technik durchgeführt wird, die aus Sprühen, Injizieren, Spülen, Eintauchen und Applikation in Substrat ausgewählt ist.

6. Verfahren nach einem der Ansprüche 1 bis 5, **dadurch gekennzeichnet, dass** die Applikation durch Eintauchen des Wurzelsystems erfolgt.

7. Verfahren nach einem der Ansprüche 1 bis 5, **dadurch gekennzeichnet, dass** die Applikation durch Eintauchen von Samen erfolgt.

## Revendications

1. Procédé pour augmenter la tolérance des plantes aux conditions de stress osmotique, **caractérisé en ce qu'**il comprend l'administration à la plante d'une dose effective d'au moins un composé de formule (III).

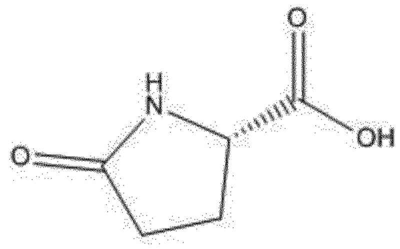

(III).

2. Procédé selon la revendication 1, **caractérisé en ce que** le composé de formule (III) est utilisé en solution aqueuse.

3. Procédé selon l'une quelconque des revendications 1 ou 2, **caractérisé en ce que** le composé de formule (III) utilise en outre un ingrédient actif qui est choisi parmi un nématicide, un insecticide, un acaricide, un fongicide, une bactéricide et un herbicide.

4. Procédé selon l'une quelconque des revendications 1 à 3, **caractérisé en ce que** le stress osmotique est causé par un déficit hydrique ou par la salinité.

5. Procédé selon l'une quelconque des revendications 1 à 4, **caractérisé en ce que** l'application du composé de formule (III) est réalisée en utilisant une technique choisie parmi la pulvérisation, l'injection, l'irrigation, l'immersion et l'application dans le substrat.

6. Procédé selon l'une quelconque des revendications 1 à 5, **caractérisé en ce que** l'application est réalisée par immersion du système racinaire.

7. Procédé selon l'une quelconque des revendications 1 à 5, **caractérisé en ce que** l'application est réalisée par immersion des graines.

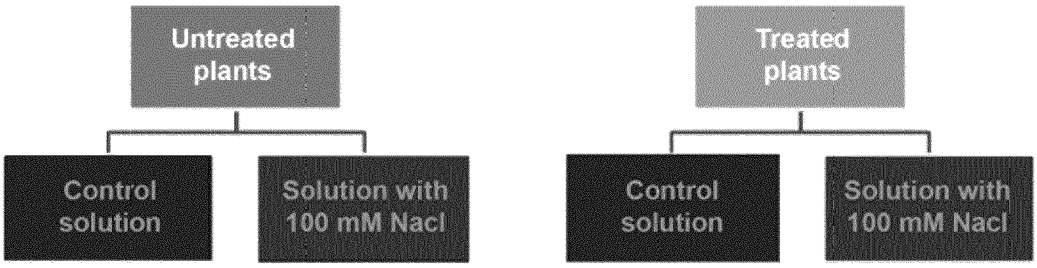
Untreated plants
Treated plants
Control solution
Solution with 100 mM Nacl
Control solution
Solution with 100 mM Nacl

Fig 1

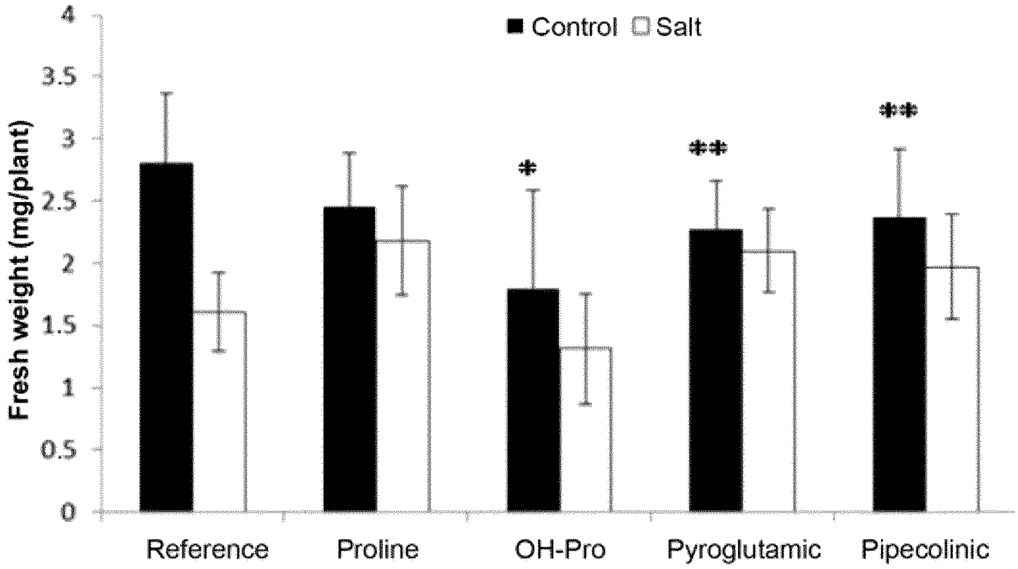
Control
Salt
Fresh weight (mg/plant)
4
3.5
3
2.5
2
1.5
1
0.5
0
*
**
**
Reference
Proline
OH-Pro
Pyroglutamic
Pipecolinic

Fig 2

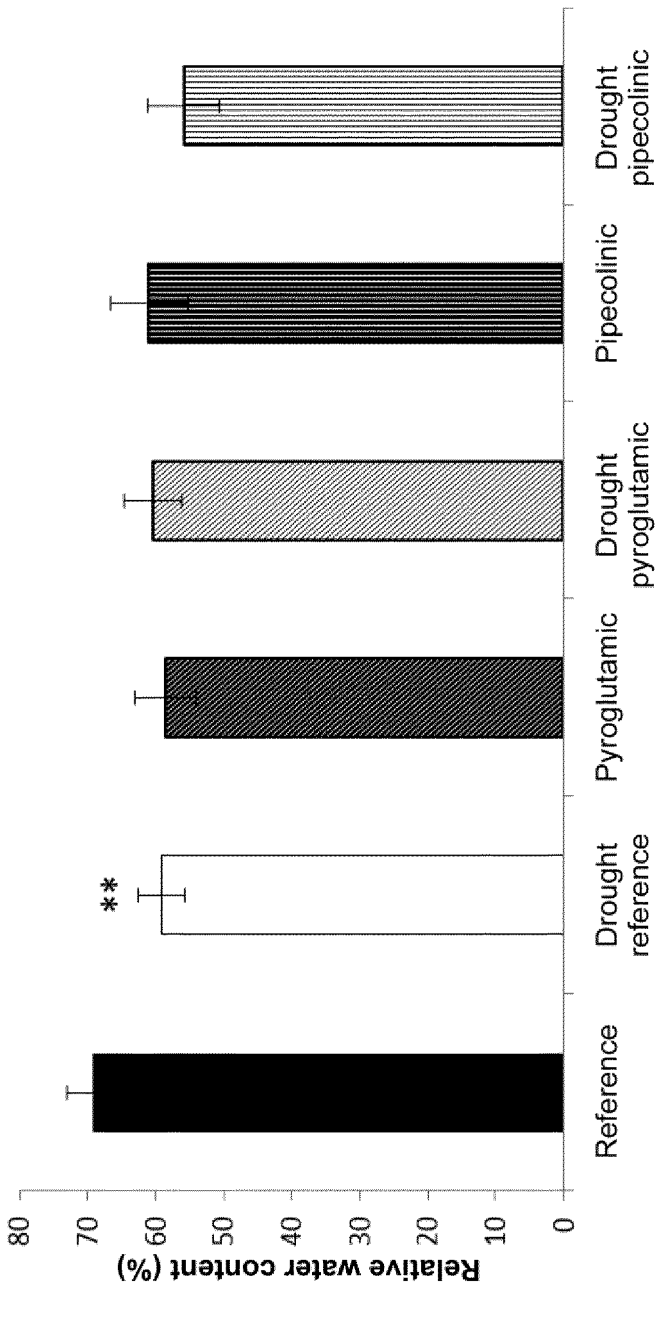
Relative water content (%)
80
70
60
50
40
30
20
10
0
Reference
Drought reference
**
Pyroglutamic
Drought pyroglutamic
Pipecolinic
Drought pipecolinic

Fig 3

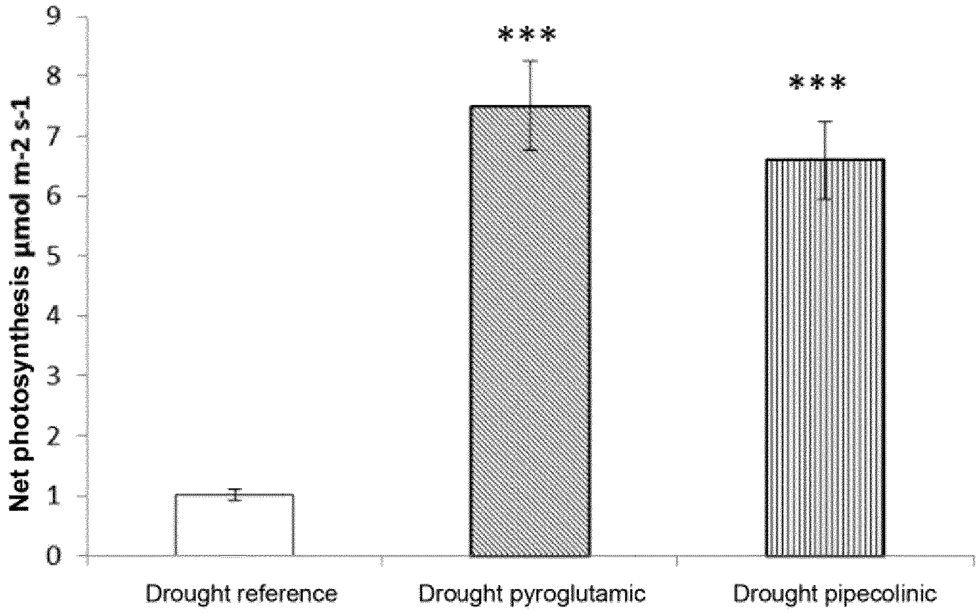
Net photosynthesis µmol m-2 s-1
9
8
7
6
5
4
3
2
1
0
***
***
Drought reference
Drought pyroglutamic
Drought pipecolinic

Fig 4

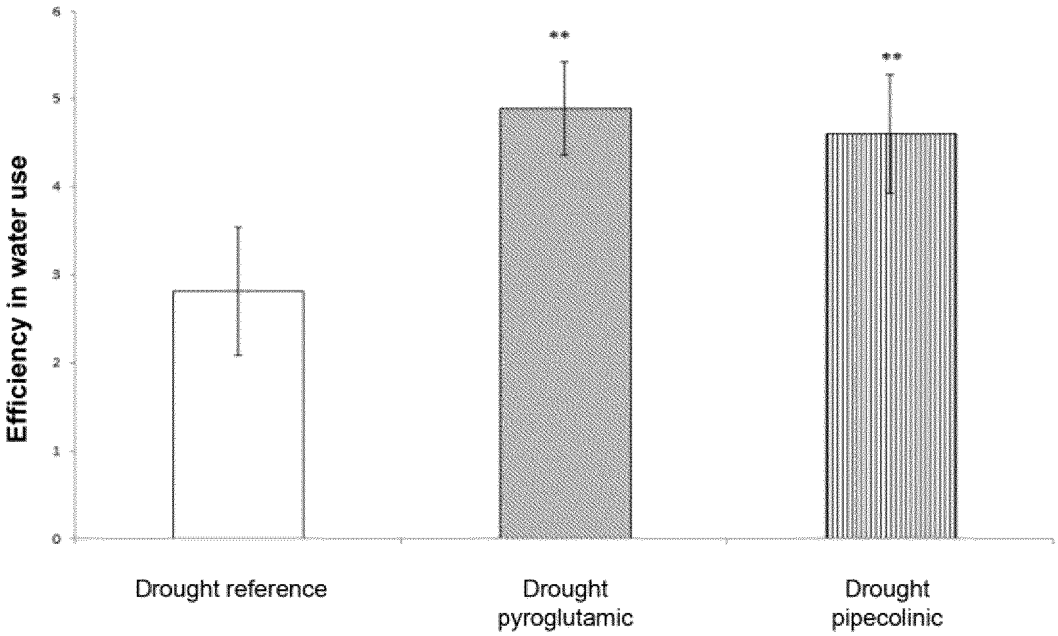
Efficiency in water use
6
5
4
3
2
1
0
**
**
Drought reference
Drought pyroglutamic
Drought pipecolinic

Fig 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- ES 2332494 B1
- US 2009054241 A1
- WO 2007056409 A2
- WO 2007104489 A1
- US 20090054241 A1


### Non-patent literature cited in the description


- **SAIRAM ; TYAGI.** *Current Science,* 2004, vol. 86 (3), 407-421
- **MUNNS ; TESTER.** *Annual Review of Plant Biology,* 2008, vol. 59, 651-681
- **EL-SAMAD et al.** *Journal of Medicinal Plants Research,* 2011, vol. 5 (24), 5692-5699
- **P. V. DEVI PRASAD et al.** *In Vitro Cellular & Developmental Biology- Plant,* 1996, vol. 32, 47-50
- **ATTIA et al.** *Physiologia Plantrum,* 2008, vol. 132, 293-305
- **JIMÉNEZ-ARIAS et al.** *Environmental and Experimental Botany,* 2015, vol. 120, 23-30
- **SAADALLAH et al.** *Agronomie,* 2001, vol. 21, 627-634
- **LAMBERS et al.** Plant Physiological Ecology. Springer, 2008